# EUROPEAN PATENT APPLICATION

(11) **EP 4 442 441 A1**
(43) Date of publication of application: **09.10.2024**
(21) Application number: 23167138.9
(22) Date of filing: 06.04.2023
(51) Int. Cl.: B29C 70/30, B29C 45/14, B29C 70/76, B29C 70/74, B29D 99/00, B32B 3/04, B64C 1/06, B64C 1/00

(54) **A METHOD FOR IN-SITU MANUFACTURING A PROTECTIVE LINER ON AN ELONGATED STRUCTURAL PART OF AN AIRCRAFT**

(71) Applicant: Airbus Operations GmbH, 21129 Hamburg (DE)
(72) Inventor: Martins, Jose, 21129 Hamburg (DE)
(74) Representative: KASTEL Patentanwälte PartG mbB

(57) **Abstract**

In order to allow the in-situ manufacture of a protective liner for an elongated finished structural part (14), it is proposed to mechanically attach a sealant mold portion (20) to the elongated finished structural part (14), specifically the surface (18) to be protected. The sealant mold portion (20) in cooperation with the elongated finished structural part (14) forms a mold cavity (22) which gets injected with a wet sealant (28). The wet sealant (28) cures into a cured sealant member (30) which is bonded to the surface (18) and acts as a protective liner.

## Description

The invention relates to a method for in-situ manufacturing a protective liner on an elongated structural part of an aircraft. The invention further relates to an in-situ mold arrangement used during the method.

EP 3 205 470 A1 discloses the manufacture of parts made of thermoplastic material, where injection means are used to inject the thermoplastic material, e.g., polyamide.

EP 1 860 250 A2 discloses a seal for a facade system.

EP 2 839 946 A2 discloses a transfer system and a method for applying a film material to an elongate member.

EP 2 176 123 A1 discloses a composite laminate structure having an edge and an impact indicator which is carried by the edge.

US 2017 / 0 152 949 A1 discloses a sealant containment assembly where at least a portion of a fastener pattern is bound between at least two components, such as components used to form a portion of an aircraft. The sealant containment assembly includes at least one sealant containment member that sealingly engages peripheral portions of the components. The sealant containment member forms a sealing chamber around at least a portion of the fastener pattern. Fluid sealant flows into the sealing chamber and cures to seal fasteners within the fastener pattern that connect the components together.

GB 2 588 967 A discloses an aircraft structure, e.g. a stringer, rib, spar or rib attachment, that has a composite laminate body. The body has an edge and an edge cap covering the edge, wherein cured resin forming part of the body bonds the edge cap on the edge. The aircraft structure is manufactured by providing a dry fibre preform of a structural component, covering an edge of the preform with an edge cap, feeding or injecting uncured resin between the edge cap device and the edge of the preform to infuse the dry fibre preform and curing the resin.

DE 10 2014 017 411 A1 discloses a Method for manufacturing a fiber composite part. A thermoplastic or elastomeric edge protection is attached to an edge of the fiber composite before the matrix of the fiber composite component is cured. After attaching the edge protection, the matrix of the fiber composite component is cured.

Unpublished European patent application 22 163 382.9 discloses a method for manufacturing a protective lining for aircraft parts. As an example, a tank wall liner can be manufactured in-situ by casting the sealant into a prepared mold that is formed at least at the bottom side by the part to be protected by the tank wall liner. Specifically, for fuel tanks, the bottom portion forms the bottom side of the mold, whereas the ribs and stringers form a circumferential wall of the mold that prevents flowing of the potting sealant compound into neighboring molds.

It is the object of the invention to improve the in-situ manufacture of protective liners.

The object is achieved by the subject-matter of the independent claims. Preferred embodiments are subject-matter of the dependent claims.

The invention provides a method for in-situ manufacturing a protective liner on an elongated structural part of an aircraft, the method comprising:
a) attaching a sealant mold portion on an elongated finished structural part of an aircraft in a detachable and non-movable manner, the elongated finished structural part having a surface to be protected, wherein the sealant mold portion gets arranged such that the sealant mold portion and the surface to be protected form a sealant mold having a mold cavity;
b) filling the mold cavity with a wet sealant;
c) curing or letting cure the wet sealant into cured sealant that is bonded to the surface and forms a protective liner; and
d) removing the sealant mold portion from the elongated finished structural part.

Preferably, in step c) the curing or letting cure is carried out in-situ with the sealant mold portion attached to the elongated finished structural part.

Preferably, step d) is performed after step c). Preferably step d) is performed immediately after step c).

Preferably, the sealant mold portion comprises an injection opening that fluidly connects to the mold cavity, and in step b) the wet sealant is filled into the mold cavity through the injection opening.

Preferably, the sealant mold portion comprises a discharge opening that fluidly connects to the mold cavity, and in step b) the wet sealant is filled, preferably injected through the injection opening, into the mold cavity until the wet sealant is discharged through the discharge opening.

Preferably, the elongated finished structural part comprises a top portion that, when the elongated finished structural part is installed on a skin of a fuselage, is spaced apart from the skin, and the surface to be protected is part of the top portion and faces away from the skin. Preferably, in step a) the sealant mold portion is arranged on the top portion of the elongated finished structural part such that the sealant mold portion and the top portion define the mold cavity.

Preferably, the elongated finished structural part comprises at least one lateral portion that, when the elongated finished structural part is installed on a skin of a fuselage, is spaced apart from the skin, and the surface to be protected is part of each lateral portion and faces parallel to the skin. Preferably, in step a) the sealant mold portion is arranged on each lateral portion of the elongated finished structural part such that the sealant mold and each lateral portion define the mold cavity.

Preferably, in step b) the wet sealant is injected with an injection pressure of 0.5 bar to 10 bar. Preferably, the method is performed at a temperature from 10 °C to 30 °C.

Preferably, the wet sealant is a self-curing sealant. Preferably, the wet sealant is chosen from a group consisting of polysulfide based sealant, polythioether based sealant, epoxy based sealant, and polyurethane based sealant.

Preferably, the sealant mold portion comprises or is made of a non-stick material that is configured such that the wet sealant does not bond to the sealant mold. Preferably, the sealant mold portion is made of metal coated with the non-stick material. Preferably, the non-stick material is chosen among a release agent, PTFE or a fluorosilicone.

The invention provides a sealant mold arrangement suitable for in-situ manufacturing a protective liner on an elongated structural part of an aircraft, the arrangement comprising an elongated finished structural part of an aircraft, the elongated finished structural part having a surface to be protected, wherein a sealant mold portion is attached to the elongated finished structural part in a detachable and non-movable manner such that the sealant mold portion and the surface to be protected form a sealant mold having a mold cavity.

Preferably, the sealant mold portion comprises an injection opening and a discharge opening each fluidly connecting to the mold cavity, wherein the injection opening and the discharge opening are arranged relative to each other such that, when wet sealant gets injected through the injection opening, the wet sealant has to pass through the entire mold cavity along at least one direction of the elongated structural part before reaching the discharge opening.

Preferably, the elongated finished structural part comprises a top portion that, when the elongated finished structural part is installed on a skin of a fuselage, is spaced apart from the skin, and the surface to be protected is part of the top portion and faces away from the skin. Preferably, the sealant mold portion is arranged on the top portion of the elongated finished structural part such that the sealant mold and the top portion define the mold cavity.

Preferably, the elongated finished structural part comprises at least one lateral portion that, when the elongated finished structural part is installed on a skin of a fuselage, is spaced apart from the skin, and the surface to be protected is part of each lateral portion and faces parallel to the skin. Preferably, the sealant mold portion is arranged on each lateral portion of the elongated finished structural part such that the sealant mold and each lateral portion define the mold cavity.

The ideas presented herein are generally useful for protecting structural parts against abrasion or mechanical wear. One idea is their application in rear center tanks of aircraft. The rear center tanks of aircraft are typically formed by elongated finished structural parts, such as frames and stringers. Typically, these parts exhibit some surfaces that would be exposed towards the tank cavity.

Here, these surfaces can be protected by application of a self-curing wet sealant using adapted mold portions and wet sealant injection injection. The whole process can be designated as wet sealant injection molding.

The wet sealant is injected into an in-situ formed mold, i.e. the mold is formed by an attached mold portion and the part to be protected. The wet sealant is cured in-situ with the mold attached such that the cured sealant can protect the structural part against abrasion/mechanical effects. Furthermore, protection against corrosion and leakage can be included.

Suitable self-curing wet sealants are generally known in the field. Examples include MC238 and MC780 available from Chemetall/BASF or PR1782 and PR2001 available from PPG Aerospace. The wet-liquid could be also epoxy, polyurethane, etc. that cures and can form a specific geometry.

In general the geometry of the part to protect can form the base of the mold. Typical thickness of the sealant is between 0 mm and 200 mm, preferably from 1 mm to 15 mm, more preferably from 3 mm to 10 mm. The sealant material can be chosen from sealing materials including polysulfide or polythioether or, more generally, any kind of liquid that cures after a time and can form the required geometry.

With this solution additional curing, e.g. in a curing oven or autoclave can be avoided. In fact, it is advantageous to avoid pre-cured parts entirely to reduce manufacturing complexity caused by, among others, logistics.

This idea can avoid additional positioning by manual labor which uses positioning devices. In contrast to other solutions, it is easier to manufacture the protected parts in the same factory.

Typical surfaces to protect are on structural parts, such as stringers, frames and couplings. These parts can be protected against abrasion of the liner (rubber) that is installed on top of the structure to protect against an impact.

In general, the following steps are performed. Applying a mold portion (e.g. made from PTFE) around the part (e.g. stringer, frame, etc.) and mechanically fixing the mold in a detachable manner. Injecting the wet sealant into the mold until the squeeze out of sealant indicates that the wet sealant has fully covered the area. This can be done using injection and discharge openings. They can be made separately or be formed on the end portions of the mold portion. After injection the whole area is typically filled with wet sealant and waiting to cure. Removing the mold after sealant is cured. Finally, the shape shall follow the specific molds.

Embodiments of the invention are described in more detail with reference to the accompanying schematic drawings that are listed below
Fig. 1 depicts a first embodiment of a method for in-situ manufacturing of a protective liner for an elongated finished structural part viewed along the structural part;
Fig. 2 depicts a second embodiment of the method; and
Fig. 3 depicts a third embodiment of the method.

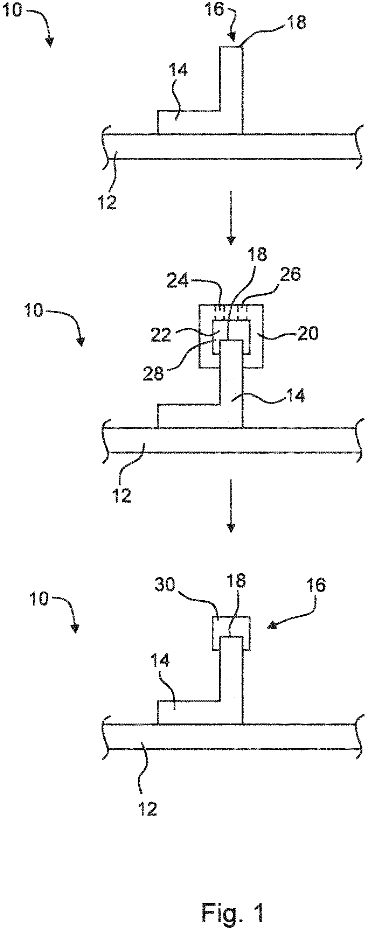

Referring to Fig. 1, a first embodiment for in-situ manufacturing of a protective liner for an elongated finished structural part is described in more detail.

Initially, a fuselage 10 is provided. The fuselage 10 comprises a skin 12 and an elongated finished structural part 14. The elongated finished structural part 14 extends along a longitudinal direction and is preferably a profile part. The elongated finished structural part 14 is preferably formed via a constant cross-section extrusion process. Examples for the elongated structural part 14 are structural reinforcement parts, such as rib, frame or stringer. The elongated finished structural part 14 comprises a top portion 16 that is spaced apart from the skin 12. The top portion 16 is configured as an edge portion and comprises a surface 18 that is to be protected from mechanical wear. The top portion 16, especially the surface 18, extend along the longitudinal direction of the elongated finished structural part 14.

A wet sealant mold portion 20 is arranged so as to cover the surface 18. The wet sealant mold portion 20 and the elongated finished structural part 14, specifically the top portion 16, cooperatively define a mold cavity 22. A preferred size of the mold cavity 22 is about 3 mm to 10 mm. However, the mold cavity 22 may reach up to 200 mm in thickness. The wet sealant mold portion 20 may include an injection opening 24 that is in fluid communication with the mold cavity 22. The injection opening 24 may be formed within a top surface of the wet sealant mold portion 20, as depicted in Fig. 1, or can be formed in a lateral surface (not shown).

The wet sealant mold portion 20 may further include a discharge opening 26. The discharge opening 26 is in fluid communication with the mold cavity 22. The discharge opening 26 may be formed in a top surface of the wet sealant mold portion 20, as depicted in Fig. 1, or can be formed in a lateral surface (not shown).

The injection opening 24 and the discharge opening 26 are arranged relative to each other such that a fluid injected through the injection opening 24 has to pass through the entire length of the mold cavity 22 in order to reach the discharge opening 26, where the fluid can be discharged. In other words, the injection opening 24 and the discharge opening 26 can be arranged relative to each other such that a fluid, e.g. uncured wet sealant, flows on the surface 18 along the longitudinal direction of the elongated finished structural part 14, preferably starting from the injection opening 24 and towards and/or out the discharge opening 26. In a variant, the injection opening 24 and/or the discharge opening 26 are formed on the proximal and distal end portions of the wet sealant mold portion 20, when viewed along the longitudinal direction of the elongated finished structural part 14.

As indicated in Fig. 1, the injection opening 24 and the discharge opening 26 can in addition be spaced apart along a lateral direction of the wet sealant mold portion 20. Consequently, fluid can pass along the entire length of the wet sealant mold portion 20 before being discharged through the discharge opening 26.

In a next step, an uncured wet sealant 28 is injected into the mold cavity 22. Preferably, the injection opening 24 through the injection opening 24 into the mold cavity 22 until the uncured wet sealant 28 is discharged from the discharge opening 26.

The wet sealant mold portion 20 is kept fixed to the elongated finished structural part 14 until the uncured wet sealant 28 has cured into a cured sealant member 30. The cured sealant member 30 preferably has simultaneously bonded to the elongated finished structural part 14, specifically to the surface 18. The cured sealant member 30 now forms a protective liner that protects the surface 18 from mechanical wear, for example, from abrasion.

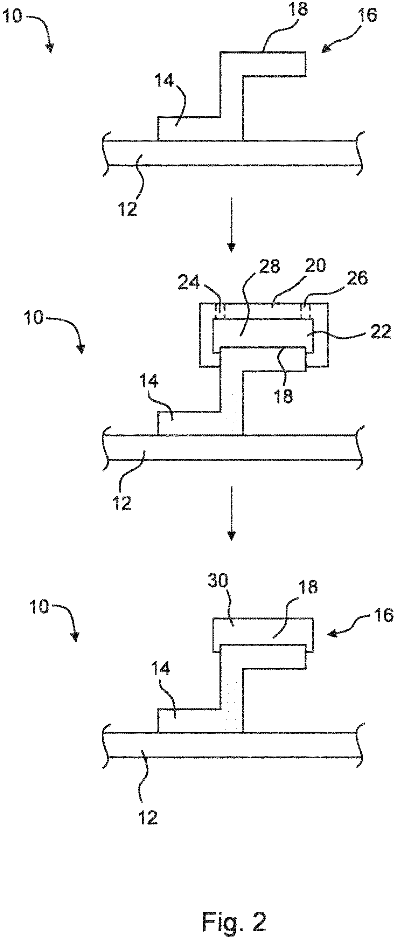

Referring to Fig. 2, a second embodiment of the method is described insofar as it differs from the first embodiment. In this variant, the top portion 16 extends in parallel to the skin 12. The surface 18 extends along the top portion 16 and for the thickness of the top portion 16. Otherwise, the steps of the method are substantially the same as in the first embodiment.

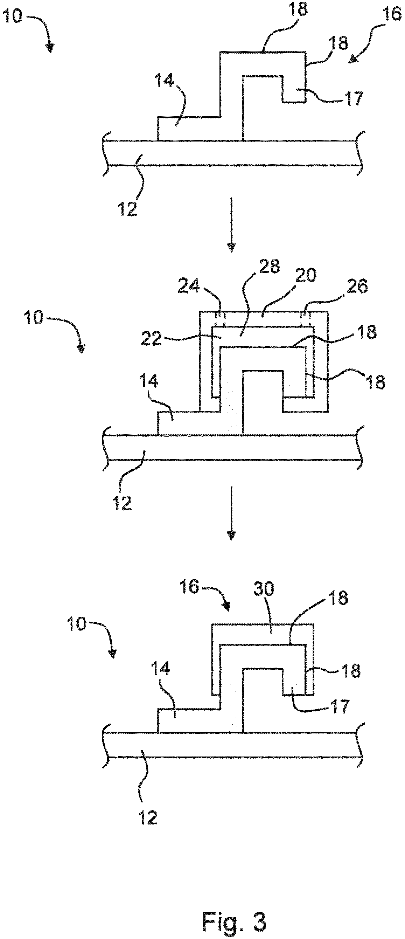

Referring to Fig. 3, a third embodiment of the method is only described insofar as it differs from the first embodiment. In contrast to the first embodiment, the elongated finished structural part 14, preferably the top portion 16, further includes a lateral portion 17. The lateral portion 17 protrudes towards the skin 12. In this embodiment, the surface 18 is arranged on the lateral portion 17. Otherwise, the steps of the method are substantially the same.

In order to allow the in-situ manufacture of a protective liner for an elongated finished structural part (14), it is proposed to mechanically attach a sealant mold portion (20) to the elongated finished structural part (14), specifically the surface (18) to be protected. The sealant mold portion (20) in cooperation with the elongated finished structural part (14) forms a mold cavity (22) which gets injected with a wet sealant (28). The wet sealant (28) cures into a cured sealant member (30) which is bonded to the surface (18) and acts as a protective liner.

### List of reference signs:

- 10: fuselage
- 12: skin
- 14: elongated finished structural part
- 16: top portion
- 17: lateral portion
- 18: surface
- 20: wet sealant mold portion
- 22: mold cavity
- 24: injection opening
- 26: discharge opening
- 28: uncured wet sealant
- 30: cured sealant member

## Claims

1. A method for in-situ manufacturing a protective liner on an elongated structural part (14) of an aircraft, the method comprising:
a) attaching a sealant mold portion (20) on an elongated finished structural part (14) of an aircraft in a detachable and non-movable manner, the elongated finished structural part (14) having a surface (18) to be protected, wherein the sealant mold portion (20) gets arranged such that the sealant mold portion (20) and the surface (18) to be protected form a sealant mold having a mold cavity (22);
b) filling the mold cavity (22) with a wet sealant (28);
c) curing or letting cure the wet sealant (28) into cured sealant (30) that is bonded to the surface (18) and forms a protective liner; and
d) removing the sealant mold portion (20) from the elongated finished structural part (14).

2. The method according to claim 1, wherein in step c) the curing or letting cure is carried out in-situ with the sealant mold portion (20) attached to the elongated finished structural part (14).

3. The method according to any of the preceding claims, wherein step d) is performed after step c).

4. The method according to any of the preceding claims, wherein the sealant mold portion (20) comprises an injection opening (24) that fluidly connects to the mold cavity (22), and in step b) the wet sealant (28) is filled into the mold cavity (22) through the injection opening (24).

5. The method according to any of the preceding claims, wherein the sealant mold portion (20) comprises a discharge opening (26) that fluidly connects to the mold cavity (22), and in step b) the wet sealant (28) is filled, preferably injected through the injection opening (24), into the mold cavity (22) until the wet sealant (28) is discharged through the discharge opening (26).

6. The method according to any of the preceding claims, wherein the elongated finished structural part (14) comprises a top portion (16) that, when the elongated finished structural part (14) is installed on a skin (12) of a fuselage (10), is spaced apart from the skin (12), and the surface (18) to be protected is part of the top portion (16) and faces away from the skin (12), wherein in step a) the sealant mold portion (20) is arranged on the top portion (16) of the elongated finished structural part (14) such that the sealant mold portion (20) and the top portion (16) define the mold cavity (22); and/or
wherein the elongated finished structural part (14) comprises at least one lateral portion (17) that, when the elongated finished structural part (14) is installed on a skin (12) of a fuselage (10), is spaced apart from the skin (12), and the surface (18) to be protected is part of each lateral portion (17) and faces parallel to the skin (12), wherein in step a) the sealant mold portion (20) is arranged on each lateral portion (17) of the elongated finished structural part (14) such that the sealant mold (20) and each lateral portion (17) define the mold cavity (22).

7. The method according to any of the preceding claims, wherein in step b) the wet sealant (28) is injected with an injection pressure of 0.5 bar to 10 bar.

8. The method according to any of the preceding claims, wherein the method is performed at a temperature from 10 °C to 30 °C.

9. The method according to any of the preceding claims, wherein the wet sealant (28) is a self-curing sealant.

10. The method according to claim 9, wherein the wet sealant (28) is chosen from a group consisting of polysulfide based sealant, polythioether based sealant, epoxy based sealant, and polyurethane based sealant.

11. The method according to any of the preceding claims, wherein the sealant mold comprises or is made of a non-stick material that is configured such that the wet sealant (28) does not bond to the sealant mold.

12. The method according to claim 11, wherein the non-stick material is PTFE or a fluorosilicone.

13. An in-situ sealant mold arrangement suitable for in-situ manufacturing a protective liner on an elongated structural part (14) of an aircraft, the arrangement comprising an elongated finished structural part (14) of an aircraft, the elongated finished structural part (14) having a surface (18) to be protected, wherein a sealant mold portion (20) is attached to the elongated finished structural part (14) in a detachable and non-movable manner such that the sealant mold portion (20) and the surface (18) to be protected form a sealant mold having a mold cavity (22).

14. The arrangement according to claim 13, wherein the sealant mold portion (20) comprises an injection opening (24) and a discharge opening (26) each fluidly connecting to the mold cavity (22), wherein the injection opening (24) and the discharge opening (26) are arranged relative to each other such that, when wet sealant (28) gets injected through the injection opening (24), the wet sealant (28) has to pass through the entire mold cavity (22) along at least one direction of the elongated structural part (14) before reaching the discharge opening (26).

15. The arrangement according to any of the claims 13 or 14, wherein the elongated finished structural part (14) comprises a top portion (16) that, when the elongated finished structural part (14) is installed on a skin (12) of a fuselage (10), is spaced apart from the skin (12), and the surface (18) to be protected is part of the top portion (16) and faces away from the skin (12), wherein the sealant mold portion (20) is arranged on the top portion (16) of the elongated finished structural part (14) such that the sealant mold (20) and the top portion (16) define the mold cavity (22); and/or
wherein the elongated finished structural part (14) comprises at least one lateral portion (17) that, when the elongated finished structural part (14) is installed on a skin (12) of a fuselage (10), is spaced apart from the skin (12), and the surface (18) to be protected is part of each lateral portion (17) and faces parallel to the skin (12), wherein the sealant mold portion (20) is arranged on each lateral portion (17) of the elongated finished structural part (14) such that the sealant mold (20) and each lateral portion (17) define the mold cavity (22).
